# EUROPEAN PATENT APPLICATION

(11) **EP 2 031 483 A1**
(43) Date of publication of application: **04.03.2009**
(21) Application number: 08009832.0
(22) Date of filing: 29.05.2008
(51) Int. Cl.: G06F 3/02

(54) **Keyboard of handheld electronic device**

(30) Priority: 27.08.2007 US 966780 P; 25.12.2007 TW 96149934
(71) Applicant: High Tech Computer Corp., Taoyuan City, Taoyuan County 330 (TW)
(72) Inventor: Chang, Yu-Hsien, Taoyuan City Taoyuan County 330 (TW); Han, Allen Ming-kuang, Bellevue, Washington 98005 (US); Yen, Ming-Hsiang, Taoyuan City Taoyuan County 330 (TW); Chen, Hung-Chih, Taoyuan City Taoyuan County 330 (TW)
(74) Representative: Becker Kurig Straus

(57) **Abstract**

A keyboard of a handheld electronic device is provided. The keyboard is divided into a number of key areas arranged in array. The keyboard includes character keys and function keys. Each of the character keys respectively occupies one of the key areas and has a first character symbol, while some of the character keys further have a second character symbol respectively. Some of the function keys have an activation key occupying one key area. The other function keys respectively include an ENTER key, a SPACE key, and a SHIFT key, each of which occupies approximately two key areas transversely. The arrangement of the keys enable users to press the key quickly, correctly, and conveniently.

## Description

### BACKGROUND OF THE INVENTION

### Field of the Invention

The present invention relates to a keyboard, and more particularly to a keyboard of a handheld electronic device.

### Description of Related Art

In current information era, human beings by degrees tend to rely on electronic products. The electronic products such as mobile phones, handheld personal computers (PCs), personal digital assistants (PDAs) and smart phones have pervaded everywhere in our daily life. For example, the mobile phones have progressed from the old-fashioned portable type to the prevailing handheld type. Manufacturers of the mobile phones are all endeavored to reduce weight and volume of the mobile phones, such that the mobile phones can be carried around with ease.

Some of the mobile phones are integrated with touch panels in replacement of keyboards on the mobile phones, so as to enable users to have relatively large display frames and to facilitate an operation mode in consideration of the restricted volume of the mobile phones. Thereby, the users have to input characters by handwriting or through virtual keyboards displayed on touch-sensitive screens of the mobile phones. Nevertheless, it is comparatively time-consuming for the users to input a great number of characters by means of handwriting, and therefore inputting the characters by pressing keys of the keyboard is still deemed more convenient. In addition, the number and the dimension of the keys of the keyboards on the mobile phones are in want of adjustment based on the volume and the style of the mobile phones. Composite keys are frequently required for activating the input functions as well. In light of the above, whether the keyboard is user-friendly or not is inevitably determined upon the layout of the keyboard.

### SUMMARY OF THE INVENTION

The present invention is directed to a keyboard of a handheld electronic device in which the layout of keys on the keyboard is rather user-friendly.

The present invention provides a keyboard of a handheld electronic device. The keyboard is divided into a number of key areas arranged in array. The keyboard includes a plurality of character keys and a plurality of function keys. Each of the character keys respectively occupies one of the key areas and has a first character symbol. Some of the character keys further have a second character symbol, respectively. The function keys include an activation key, an ENTER key, a SPACE key, and a SHIFT key. The activation key occupies one key area. Besides, the activation key is suitable for activating the second character symbol on certain keys, such that information represented by the second character symbol is input through the certain keys. The ENTER key occupies approximately two adjacent key areas transversely. The SPACE key occupies approximately two adjacent key areas transversely. The SHIFT key also occupies approximately two adjacent key areas transversely.

On account of the fact that the key areas occupied by the keys on the keyboard of the handheld electronic device are in different numbers, the users are able to press the keys rapidly and correctly by means of the user-friendly keyboard of the present invention. In addition, since it is more likely for the users to move their fingertips on the keyboard in a transverse manner, the function keys occupying approximately two transverse key areas allow the users to sense the difference arisen from two adjacent keys on the keyboard of the present invention. As such, the users are able to better identify the precise locations of the keys through the layout of the keyboard proposed by the present invention. Moreover, the keyboard of the present invention provides a more user-friendly interface through disposing the relevant keys at neighboring positions on the keyboard.

In order to make the aforementioned and other objects, features and advantages of the present invention more comprehensible, several embodiments accompanied with figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a schematic view illustrating a keyboard of a handheld electronic device according to an embodiment of the present invention.

FIG. 2 is a schematic view illustrating a keyboard of a handheld electronic device according to another embodiment of the present invention.

FIG. 3 is a schematic view illustrating a keyboard of a handheld electronic device according to still another embodiment of the present invention.

### DESCRIPTION OF EMBODIMENTS

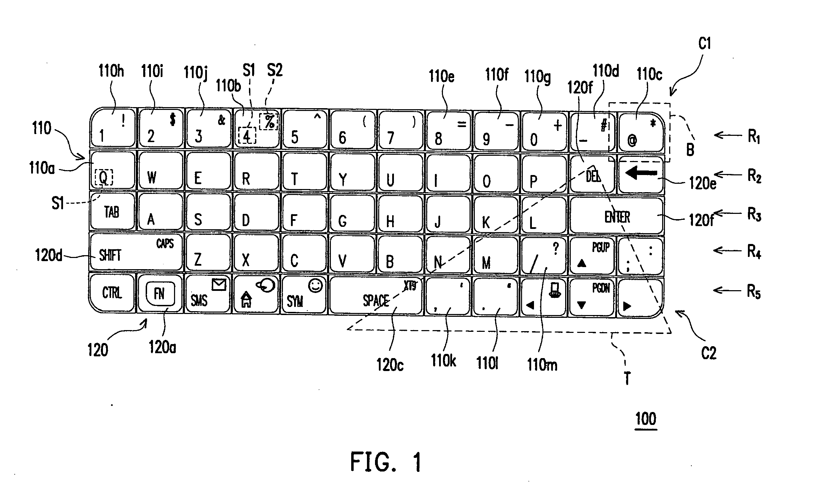

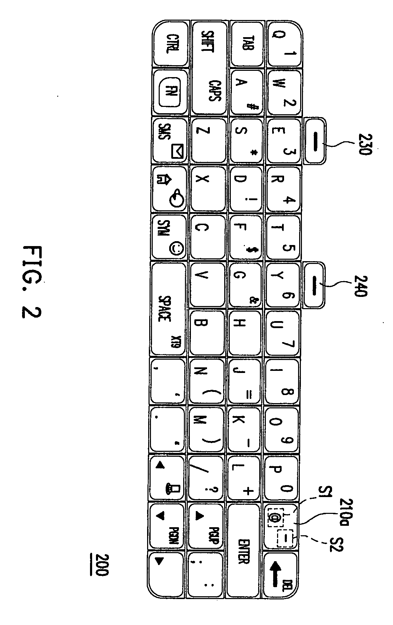

FIGs. 1 through 3 are schematic views illustrating a keyboard of a handheld electronic device according to several embodiments of the present invention. A keyboard 100 depicted in FIG. 1 and a keyboard 200 illustrated in FIG. 2 are applicable to a transverse handheld electronic device, such as a mobile phone with a transverse slide. In comparison with the keyboard 100, number keys on the keyboard 200 are integrated with the keys labeled as "Q", "W", "E", "R", "T", "Y", "U", "I", "O", and "P". Additionally, the keyboard 200 further includes a left SOFT key 230 and a right SOFT key 240. As the keyboard 200 is applied to the handheld electronic device having no touch panel, it is likely for the users to use the left SOFT key 230 and the right SOFT key 240 to switch a menu and to execute or cancel a program.

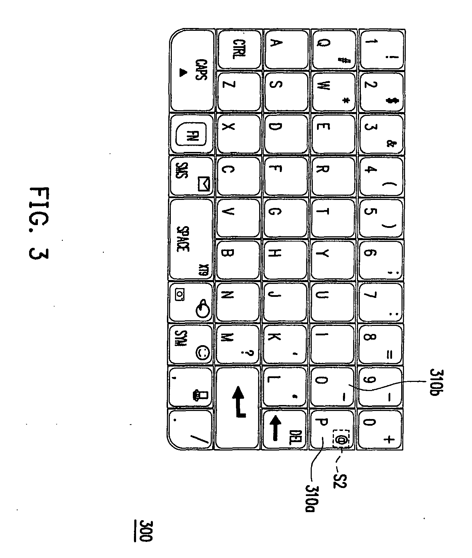

On the other hand, a keyboard 300 illustrated in FIG. 3 is applicable to an upright handheld electronic device, such as a bar-type phone. In most cases, the keys transversely arranged on the keyboard 300 are fewer than the keys transversely arranged on the keyboards 100 and 200 on account of the width of the handheld electronic device.

Notwithstanding the layouts of the keys on the keyboards 100, 200, 300 are varied upon their respective types of applications, said three keyboards 100, 200, and 300 are designed based on the same concept. As such, the keyboard 100 shown in FIG. 1 is employed to exemplify the present invention, while FIGs. 2 and 3 can also be taken for references. The similarities among said three keyboards will not be described repetitively, while the differences among the three keyboards will be elaborated with reference to the keyboard 200 depicted in FIG. 2 or the keyboard 300 illustrated in FIG. 3.

Referring to FIG. 1, the keyboard 100 of the handheld electronic device is divided into a plurality of key areas B arranged in array. The keyboard 100 includes a plurality of character keys 110 and a plurality of function keys 120. Each of the character keys 110 occupies one of the key areas B, respectively. The function keys 120 include an activation key 120a labeled as "Fn" occupying one key area B, an ENTER key 120b, a SPACE key 120c, and a SHIFT key 120d. The ENTER key 120b, the SPACE key 120c, and the SHIFT key 120d all occupy approximately two adjacent key areas B transversely. In other words, the widths of the ENTER key 120b, the SPACE key 120c, and the SHIFT key 120d double the widths of the activation key 120a and the character keys 110. Said difference in the widths of the keys allows the user to swiftly and correctly press the correct keys on the keyboard 100. Namely, the layout of the keyboard 100 is much more user-friendly than that of the conventional keyboard.

Each of the character keys 110 has a first character symbol S1. For instance, a character key 110a has the letter "Q" as the first character symbol S 1. Besides, some of the character keys 110 simultaneously have the first character symbol S 1 and a second character symbol S2, such as a character key 110b having both a number "4" and a character symbol "%" labeled thereon. In the present embodiment, the first character symbol S 1 and the second character symbol S2 are respectively marked on two opposite corners on the character key 110b. For example, the number "4" and the character symbol "%" are respectively labeled on a lower-left corner and an upper-right corner of the character key 110b. Moreover, the first character symbol S 1 and the second character symbol S2 can be marked in different colors for the purpose of identification.

The activation key 120a is suitable for activating the second character symbol S2 on certain keys, such that information represented by the second character symbol S2 is input through the certain keys. For example, as the activation key 120a is held and the SHIFT key 120d is also pressed, a function represented by "CAPS" marked on the SHIFT key 120d is activated. That is to say, the SHIFT key 120d is also equipped with a capitalization function represented by a CAPS key. In addition, the capitalization function represented by the CAPS key can be activated by continuously pressing the SHIFT key 120d for twice.

In general, the ENTER key 120b, the SPACE key 120c, and the SHIFT key 120d are used more frequently than other character keys 110 and the activation key 120a. Hence, the layouts of the ENTER key 120b, the SPACE key 120c, and the SHIFT key 120d which occupy two key areas enable the users to press the keys accurately, so as to significantly prevent the users from inputting incorrect information by pressing the wrong keys. Moreover, the horizontal length of the keyboard 100 is greater than the vertical height of the keyboard 100, and the rows arranged in a transverse manner on the keyboard 100 are in greater number than the columns vertically arranged on the keyboard 100. Therefore, it is more likely for the users to move their fingertips on the keyboard 100 in a transverse manner rather than in a vertical manner. As such, the users are apt to sense the difference in pressing the ENTER key 120b, the SPACE key 120c, and the SHIFT key 120d all occupying approximately two transverse adjacent key areas B instead of occupying approximately two vertical adjacent key areas B.

To equip the keyboard 100 of the present embodiment with a more user-friendly interface, relevant keys are disposed at neighboring positions on the keyboard 100 in the present embodiment. That is to say, the relevant keys are grouped together. For example, the keyboard 100 can include a backspace key 120e labeled by a right-to-left arrow and a delete key 120f labeled as "DEL". Both of the backspace key 120e and the delete key 120f are located above the ENTER key 120b.

Likewise, to equip the keyboard 100 of the present embodiment with a more user-friendly interface, the most common symbols are disposed at neighboring positions on the keyboard 100 in the present embodiment. That is to say, the most common symbols are grouped together. For example, the "@" character symbol and the "_" character symbol are grouped together. The "#" character symbol and the " * " character symbol are grouped together. The "=" character symbol, the "+" character symbol, and the " - " character symbol are grouped together. The "!" character symbol, the " & " character symbol, and the " $ " character symbol are grouped together. The " , " character symbol, the " . " character symbol, and the " ? " character symbol are grouped together. Said arrangement will be elaborated hereinafter.

In detail, the character keys 110 further include a character key 110c having the "@" character symbol and a character key 110d having the "_" character symbol. The two character keys 110c and 110d are adjacent to each other and are located on the key areas B in a corner C 1 of the keyboard 100, such as the upper-right corner C 1 of the keyboard 100 depicted in FIG. 1. In the present embodiment, the "@" character symbol and the "_" character symbol are respectively the first character symbols S 1 of the character keys 110c and 110d. However, in another embodiment, the "@" character symbol and the "_" character symbol are respectively the first character symbol S 1 and the second character symbol S2, as indicated by a character key 210a in FIG. 2. In still another embodiment, the "@" character symbol and the "_" character symbol are both the second character symbols S2, as indicated by character keys 310a and 310b in FIG. 3.

Additionally, the adjacent character keys 110c and 110d may further have the " # character symbol and the " * " character symbol which are both the second character symbols S2. In another embodiment (not shown), the " # " character symbol and the " * " character symbol are both the first character symbols S 1. Alternatively, the " # " character symbol and the " * " character symbol can be the first character symbol S1 and the second character symbol S2, or are otherwise the second character symbol S2 and the first character symbol S 1.

Moreover, the character keys 110 further include a character key 110e having the " = " character symbol, a character key 110f having the " - " character symbol, and a character key 110g having the " + " character symbol. The three character keys 110e∼110g are adjacent to one another. Furthermore, the character keys 110 further include a character key 110h having the " ! " character symbol, a character key 110i having the " $ " character symbol, and a character key 110j having the " & " character symbol. The three character keys 110h∼110j are adjacent to one another. In the present embodiment, the character keys 110e∼110j can be integrated with the number keys, and the " = " character symbol, the " + " character symbol, the " - " character symbol, the " ! " character symbol, the " $ " character symbol, and the " & " character symbol can all be the second character symbols S2 on the number keys. For example, the number "0" is the first character symbol S1 of the character key 110g, while the " + " character symbol is the second character symbol S2 of the character key 110g.

More specifically, the character keys 110 further include a character key 110k having the " , " character symbol, a character key 1101 having the " . " character symbol, and a character key 110m having the " ? " character symbol. The three character keys 110k∼110m are located on the key areas B in a corner C2 of the keyboard 100. According to the present embodiment, the character keys 110k∼110m are located within a triangular area T defined by the SPACE key 120c, the delete key 120f and the corner C2 of the keyboard 100.

In the present embodiment, the keyboard 100 of the handheld electronic device further includes a plurality of number keys "0"∼"9". For example, the character key 110h has the number "1" marked thereon, while the character key 110i has the number "2" marked thereon. The number keys "0"∼"9" are arranged in a transverse row R1. Said arrangement of the number keys "0"∼"9" on the keyboard 100 resembles the arrangement of the number keys on a keyboard of a desktop computer or a laptop computer. That is to say, the users who are already accustomed to the normal arrangement of the number keys "0"∼"9" need not learn to use the keyboard of the present embodiment.

Besides, the keyboard 100 of the handheld electronic device further include a plurality of alphabet keys "A"∼"Z", such as the character key 110a having the letter "Q", and so on. To facilitate the use of the keyboard, the alphabet keys are arranged in three transverse rows R2∼R4 as indicated in FIGs. 1-3. As shown in FIG. 2, each of the number keys "0"∼"9" can be respectively integrated with one of the alphabet keys "Q", "W", "E", "R", "T", "Y", "U", "I", "O", and "P" located in the uppermost row. In an alternative, as shown in FIGs. 1 and 3, the number keys "0"∼"9" can also be separated from and located above one of the alphabet keys "Q", "W", "E", "R", "T", "Y", "U", "I", "O", and "P". Furthermore, the key areas B indicated in FIGs. 1 and 3 are arranged in five transverse rows R1∼R5.

In the present embodiment, the number keys "0"∼"9" and the key areas B located in the same row R1 as the number keys "0"∼"9" are 12 in number (as indicated in FIGs. 1-3). The key areas B in FIGs. 1-3 are approximately laid within a rectangular area to ensure compactness of the keyboard.

To sum up, the key areas occupied by certain keys on the keyboard of the handheld electronic device proposed in the present invention are in different numbers. Hence, the users are able to press the keys rapidly and correctly by means of the user-friendly keyboard of the present invention. Moreover, the horizontal length of the keyboard is greater than the vertical height thereof, and thereby it is more likely for the users to move their fingertips on the keyboard in a transverse manner than in a vertical manner. As such, the function keys occupying approximately two transverse key areas allow the users to sense the difference arisen from two adjacent keys on the keyboard of the present invention, such that the users are able to better identify the precise locations of the keys through the layout of the keyboard proposed by the present invention. Furthermore, the keyboard of the present invention provides a more user-friendly interface through disposing the relevant keys at the neighboring positions on the keyboard. Namely, the relevant keys are grouped together in the present invention.

Though the present invention has been disclosed above by the embodiments, they are not intended to limit the present invention. Anybody skilled in the art can make some modifications and variations without departing from the spirit and scope of the present invention. Therefore, the protecting range of the present invention falls in the appended claims.

## Claims

1. A keyboard of a handheld electronic device, the keyboard being divided into a plurality of key areas arranged in array and comprising:
a plurality of character keys respectively occupying one of the key areas, each of the character keys having a first character symbol, some of the character keys further having a second character symbol respectively; and
a plurality of function keys, comprising:
an activation key occupying one key area for activating the second character symbol on certain keys, such that information represented by the second character symbol is input through the certain keys;
an ENTER key occupying approximately two adjacent key areas transversely;
a SPACE key occupying approximately two adjacent key areas transversely; and
a SHIFT key occupying approximately two adjacent key areas transversely.

2. The keyboard of the handheld electronic device as claimed in claim 1, wherein the character keys comprise two keys respectively having a "@" character symbol and a "_" character symbol, and the two keys respectively having the "@" character symbol and the "_" character symbol are adjacent to each other and located on the key areas in a corner of the keyboard, wherein both the "@" character symbol and the "_" character symbol are the first character symbols or the second character symbols.

3. The keyboard of the handheld electronic device as claimed in claim 1, the character keys comprising one key simultaneously having a "@" character symbol and a "_" character symbol and located on the key area in a corner of the keyboard, wherein the "@" character symbol and the "_" character symbol are respectively the first character symbol and the second character symbol, or are otherwise the second character symbol and the first character symbol, respectively.

4. The keyboard of the handheld electronic device as claimed in claim 1, wherein the character keys comprise two keys respectively having a " # " character symbol and a " * " character symbol, and the two keys respectively having the " # " character symbol and the " * " character symbol are adjacent to each other, wherein both of the " # " character symbol and the " * " character symbol are the second character symbols.

5. The keyboard of the handheld electronic device as claimed in claim 1, wherein the character keys comprise three keys respectively having a " = " character symbol, a " + " character symbol, and a " - " character symbol, and the three keys respectively having the " = " character symbol, the " + " character symbol, and the " - " character symbol are adjacent to one another, wherein all of the " = " character symbol, the " + " character symbol, and the " - " character symbol are the second character symbols.

6. The keyboard of the handheld electronic device as claimed in claim 5, wherein the character keys comprise a plurality of number keys, and three of the number keys are integrated with the keys having the " = " character symbol, the " + " character symbol, and the " - " character symbol.

7. The keyboard of the handheld electronic device as claimed in claim 1, wherein the character keys comprise three keys respectively having a " ! " character symbol, a " & " character symbol, and a " $ " character symbol, and the three keys respectively having the " ! " character symbol, the " & " character symbol, and the " $ " character symbol are adjacent to one another, wherein all of the " ! " character symbol, the " & " character symbol, and the " $ " character symbol are the second character symbols.

8. The keyboard of the handheld electronic device as claimed in claim 1, wherein the character keys comprise three keys respectively having a " , " character symbol, a " . " character symbol, and a " ? " character symbol, and the three keys respectively having the " , " character symbol, the " . " character symbol, and the " ? " character symbol are located on the key areas in a corner of the keyboard and the keyboard further comprises a delete key above the ENTER key, wherein the three keys respectively having the " , " character symbol, the " . " character symbol, and the " ? " character symbol are located within a triangular area defined by the SPACE key, the delete key and the corner of the keyboard.

9. The keyboard of the handheld electronic device as claimed in claim 1, further comprising a backspace key and a delete key above the ENTER key.

10. The keyboard of the handheld electronic device as claimed in claim 1, wherein the SHIFT key is further equipped with a capitalization function represented by a CAPS key.

11. The keyboard of the handheld electronic device as claimed in claim 1, wherein the character keys comprise a plurality of number keys transversely arranged in a row.

12. The keyboard of the handheld electronic device as claimed in claim 11, wherein the character keys further comprise a plurality of alphabet keys transversely arranged in three rows, and each of the number keys is respectively integrated with one of the alphabet keys located in the uppermost row.

13. The keyboard of the handheld electronic device as claimed in claim 11, wherein the character keys further comprise a plurality of alphabet keys, and each of the number keys is separated from and located above one of the alphabet keys.

14. The keyboard of the handheld electronic device as claimed in claim 11, wherein the number keys and the key areas located at the same row as the number keys are 12 in number.

15. The keyboard of the handheld electronic device as claimed in claim 1, wherein the key areas are arranged transversely in five rows and the key areas are approximately laid within a rectangular area.
